# EUROPEAN PATENT SPECIFICATION

(11) **EP 2 657 367 B1**
(45) Date of publication and mention of the grant of the patent: **25.11.2015**
(21) Application number: 12165248.1
(22) Date of filing: 24.04.2012
(51) Int. Cl.: C23C 18/20, C23C 18/24, C23C 18/30, C08J 7/02

(54) **Pre-etching composition and etching process for plastic substrates**
Vorätzzusammensetzung und Ätzverfahren für Kunststoffsubstrate
Composition de pré-décapage et procédé de décapage pour substrats en plastique

(43) Date of publication of application: 30.10.2013
(73) Proprietor: Enthone Inc., West Haven, Connecticut 06516 (US)
(72) Inventor: Ziegert, Christin, 40627 Düsseldorf (DE); Rietmann, Christian, 47665 Sonsbeck (DE)
(74) Representative: Michalski Hüttermann & Partner Patentanwälte mbB

(56) References cited:
- EP-A2- 0 454 929
- US-A- 4 006 269
- US-A- 5 015 329
- US-A- 5 271 773
- US-A- 5 332 465

## Description

The present invention relates to a pre-etching composition for the treatment of non-conductive substrates in a plating process for the deposition of a metal layer on the substrate surface. More specifically, the invention relates to an aqueous pre-etching composition for a plastic substrate, like e.g. an acrylonitrile butadiene styrene (ABS), a polycarbonate (PC), polyetherimide (PEI), or a blend of an acrylonitrile butadiene styrene (ABS) and a polycarbonate (PC). The invention further relates to a process of etching a non-conductive substrate surface prior to a metal plating step.

Coating of non-conductive substrate surfaces, like e.g. plastic surfaces, with a metal coating is a practice that is variously used for affecting the surface properties of substrates. Non-conductive surfaces are frequently coated with suitable metal layers either for technical reasons or for decorative reasons. For example, metallization, i.e. coating of a surface with a metal layer, of non-conductive surface to render such surfaces electrically conductive is widely used in the field of manufacturing integrated circuits, printed circuit boards, or other electric or electronic components. Furthermore, substrate surfaces are coated for decorative reasons with a metal layer having corresponding optical or haptical characteristics. Especially in the field of automotive decoratively metalized plastic surfaces are widely spread. In the domain of electric and electronic engineering conductive structures are deposited for instance on plastic boards to set up integrated circuits by means of suitable metal deposition processes. For the durability of the metal layers deposited on the plastic substrate surfaces it is decisive that the same exhibit sufficient adhesion on the substrate surface. To provide a corresponding ED 40284 / UAM:UA adhering strength, it is common practice in the art of metal plating to roughen the relevant surfaces of a plastic substrate prior to a metal deposition. For this purpose different processes are known from the state of the art. In the state of the art such processes are also referred to as etching or pickling of the surface. The etching processes known from the art are both, chromium-(VI) free processes and chromium-(VI)-containing processes. Both kinds of processes are based on an oxidative decomposition of moieties of the plastic surface, like e.g. butadiene moieties in an ABS or ABS-blend plastic material, whereby caverns are formed on the surface. These caverns function as a fixture to a subsequent deposited metal coating.

For example, WO2005094394 discloses a process for preparing a non-conductive substrate for subsequent metallization. Here, a plastic surface is etched with a etching solution comprising a permanganate and a mineral acid.

US 7,025,867 discloses the treatment of a plastic surface with an acidic permanganate solution prior to direct electrolytic metallization of an electrically non-conductive substrate surface.

The German patent DE 197 40 431 C1 discloses an etching step in the metallization of an electrically non-conductive surface area in which the substrate surface is treated with an acidic etching solution containing a hydrogen peroxide. The acid in the acidic solution may be phosphoric acid.

The German patent application DE 100 54 544 discloses an etching process for plastic substrate surfaces by means of a solution containing chromate ions. The mixture contains chromium trioxide and concentrated sulfuric acid.

The European patent EP 1 785 507 discloses an etching method for non-conductive substrate surface in which an etching solution containing a halogenide or nitrate of the group consisting of Na, Mg, Al, Si, Sc, Ti, Ca, V, Cr, Mn, Fe, Co, Ni, Cu and Zn and a soluble coordinative compound of the general formula M¹(HF₂) is used.

WO2009/023628 discloses an etching solution for the surface pre-treatment of a plastic surface in preparation of a subsequent metallization, the solution comprising a source of Mn(VIII) ions and an inorganic acid, wherein the pickling solution is substantially free of chromium (VI) ions, alkali ions, and alkaline-earth ions.

In US 5332465 A process is disclosed which is employed in sensitizing plastic surfaces prior to etching which sensitization enhances the coverage and adhesiveness of the subsequent plate. The composition and process proposed use Limonene, solutions of Limonene and Emulsions of Limonene for the sensitizer.

US 5271773 A disclose a composition and process for cleaning articles contaminated with water insoluble contaminants. The process allows for recycling of components in the system. The wash solution effectively cleans water insoluble contaminants and, upon settling, quickly releases contaminants from the wash solution.

US 4006269 disclose a method for sensitizing a substrate of non-conductive material for the deposition thereon of a conductive film of copper or nickel comprises the steps of applying to the substrate a substance which can photochemically abstract a hydrogen atom from a hydrogen donor in the presence of a suitable solvent, and subsequently immersing the sensitized substrate in a solution containing certain metal ions such as copper, nickel or silver, and simultaneously exposing the sensitized substrate to radiation from an ultraviolet light source.

As one can see from the above, different approaches for etching non-conductive surface prior to a metallization are known from the state of the art. However, chromium-(VI)-compounds are under suspicion of being possible carcinogenic so that handling of those compounds is subject to governmental regulations of environmentalism and a prohibition of commercial use of such compounds cannot be ruled out in general. Acidic chromium-free etching solutions based on permanganate show a rapid self-reactivity and decomposition. This results in a relatively short lifetime of such etching solutions. Alkaline manganese etching solutions have a reasonable stability and are environmental friendly, however, the etching capability especially on plastic substrates, like e.g. ABS, PC, PEI, or ABS/PC blends, is not very strong so that relative long treatment times are needed.

It is therefore an object of the invention to provide a composition to enhance the etching of non-conductive plastic substrate surfaces in a plating process for the deposition of a metal layer. It is another object of the invention to provide an enhanced process for etching non-conductive plastic substrate surface in a plating process for the deposition of a metal layer.

With respect to the solution, the object of the invention is solved by a pre-etching composition according to claim 1.

Thus, an aqueous pre-etching composition for the treatment of non-conductive substrates in a plating process for the deposition of a metal layer on a substrate surface is provided, wherein the pre-etching composition contains at least one water soluble solvent, wherein the composition contains at least one compound selected from the group consisting of terpenes phenylpropanoides, isovanillin and vanillin characterized in that the composition additionally contains at least one solvent selected from the group consisting of 2-methylpentanedioic acid dimethyl ester, isopentyl diol, 6,6-dimethyl bicyclo-(3,1,1)-2-heptene-2-ethanol, and ethylacetoacetate.

Surprisingly it was found that a pre-etching composition comprising a water soluble solvent and a terpene and/or a phenylpropanoid and/or vanillin and/or isovanillin is capable to swell a substrate surface of a non-conductive plastic substrate, especially of a substrate made from ABS, PC, PEI, and/or ABS/PC blend. It was found that due to the swelling of the substrate surface a subsequently applied etching solution shows an increased etching capability. This enables the use of less aggressive and more environmental friendly etching solutions, like e.g. alkaline manganese etching solutions. On the other hand, when using commonly known etching solutions, like e.g. chromic acid etching solutions or acidic manganese etching solutions, the treatment time for achieving an appropriate etching result, i.e. an appropriate roughened surface, can significantly be reduced. By such reduction of treatment time the overall efficiency of the plating process can be increased.

According to a preferred embodiment of the invention, the aqueous pre-etching composition contains a solvent which is selected from the group consisting of glycols and their derivates, for example dipropylene glycol, diethylene glycol monobutyl ether, diethylene glycol, ethylene glycol, ethylene glycol dimethyl ether, triethylene glycol, Diethylene glycol dimethyl ether (Diglyme), triethylene glycol dimethyl ether (triglyme), tetraethylene glycol dimethyl ether (tatraglyme), dipropylene glycol dimethyl ether (proglyme), polyethylene glycol dimethyl ether (polyglyme), also several solvents like soluble alcohols, ethers, esters, for example isopentyle diole, 3-methoxy-3-methylbutan-1-ol or its acetate, Butyro-1.4-lacton, 1.3-dioxacyclopentan, 4-methyl-1.3-dioxacyclopentan or a mixture of these. It was found that, in combination with the a terpene and/or a phenylpropanoid, such solvents are especially capable to provide an aqueous pre-etching composition which is capable to swell the surface of a non-conductive plastic substrate, like e.g. a substrate made from ABS, PC, PEI, or an ABS/PC blend, in such way that in a subsequent etching step a efficiently roughened surface can be achieved, which enhances the adhesion of the subsequent deposited metal layer.

According to another preferred embodiment of the invention, the terpene is at least one compound selected from the group consisting of acyclic monoterpenes, monocyclic terpenes, bicyclic monoterpenes, sesquiterpenes, diterpenes, and triterpenes. Surprisingly, it was found that such compounds a well suitable to increase the swelling of a plastic substrate surface prior to an etching step. Especially, where the terpene is at least one compound selected from the group consisting of citrale, myrcene, geraniol, citronellal, citronellol, 1,8-cineole, carvone, phellandrene, α-pinene, β-pinene, limonene, camphene, 3-carene, terpinolene, bornyl acetate, menthol, menthone, citronellol, nerol, linalool, farnesol, rhodinol, sabinene, borneole, isoborneole, α-terpineol, β-terpineol, γ-terpineol, δ-terpineol, trans-verbenol, cis-verbenol, isovaleric acid, and Gibberellic acid it was found that the pre-etching composition has a good swelling activity on non-conductive plastic substrate surfaces, like e.g. substrates made from ABS, PC, PEI, or an ABS/PC blend.

Furthermore, according to another embodiment of the invention, the phenylpropanoid has a structure according to the general formula I 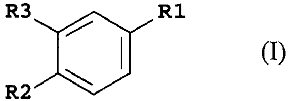 wherein R1 = C₃H₅,C₃H₃O, or C₃H₅O, R2 = H, OCH₃, OH, and R3 = H, OH, OCH₃, COOCH₃, wherein at least R1 differs from R2 or R3, or R2 and R3

It was found that also such phenylpropanoidic structures as represented in the general formula I are capable to achieve an appropriate swelling of a plastic surface prior to an etching of said surface.

However, while not to be bound to this theory, it is believed that the isoprene substructures comprised in both, the terpenes and the phenylpropanoids, is responsible for the swelling ability of the compounds and for overall pre-etching compositions according to the invention. It is a preferred side effect that most of these terpenes and the phenylpropanoids have delightful odor which makes handling of the composition quite pleasant.

Preferably, phenylpropanoids to be used in the pre-etching composition according to the invention are selected from the group consisting of anethole, estragole, eugenole, isoeugenole, methyl eugenole, cinnamaldehyde, cinnamic acid, coniferyl alcohol, safrole, apiole, and dillapiole, or combination of these.

According to an embodiment of the invention, a combination of at least some of the aforementioned terpenes and/or phenylpropanoids and/or vanillin and/or isovanillin is used, wherein the selection of the terpenes and/or phenylpropanoids is made on basis of their odors with the aim to provide a pre-etching composition having a commonly enjoyable perceived odor. By doing so the pre-etching composition, when used with an etching composition and/or the plating composition in a common workshop, will be capable to compensate and/or gild displeasing odors coming from the other compositions used. This contributes to a friendly working environment.

According to an embodiment of the invention, the water soluble solvent is comprised in the composition in a concentration within the range of between 5 Vol.-% and 50 Vol.-%, preferably between 10 Vol.-% and 40 Vol.-%, most preferred between 20 Vol.-% and 40 Vol.-%. It was found that such concentrations are especially suitable to provide a pre-etching solution having good swelling activity on non-conductive substrates, like e.g. substrates made from ABS, PC, PEI, and ABS/PC blends.

In another embodiment, the terpenes and/or phenylpropanoids are comprised in pre-etching composition in a concentration of at least 0.005 mol/L, preferably in a concentration within the range between 0.005 mol/L and 1.0 mol/L, more preferred in a concentration within the range between 0.01 mol/L and 0.8 mol/L, even more preferred in a concentration within the range between 0.02 mol/L and 0.5 mol/L, most preferred in a concentration within the range between 0.03 mol/L and 0.3 mol/L.

According to another embodiment of the invention, the composition additionally contains at least one solvent selected from the group consisting of 2-methylpentanedioic acid dimethyl ester, isopentyl diol, 6,6-dimethyl bicyclo-(3,1,1)-2-heptene-2-ethanol, and ethylacetoacetate. It was found that the addition of at least one of these solvents additionally increases the swelling activity of the pre-etching composition, so that treatment time can be reduced. Said additionally solvents may be comprised in the inventive pre-etching composition in an overall concentration within the range of between 5 ml/L to 250 ml/L, preferably, 8ml/L to 200 ml/L, most preferred 10ml/L to 180 ml/L.

Additionally, according to an embodiment of the invention, the pre-etching composition may contain at least one acid of the group consisting of mineral acid, sulfonic acid, methanesulfonic acid, carboxylic acid, and salts of the aforementioned acids. It was found that by adding an acid of the aforementioned group to the pre-etching composition the swell activity of the composition is increased. Said acid may be comprised in the pre-etching composition in a concentration within the range of between 1 ml/L to 100 ml/L, preferably 3 ml/L to 50 ml/l, most preferred 5 ml/L to 20 ml/L.

The pH value of the pre-etching composition according to the invention may vary in a range of between pH 2 and pH 10. Surprisingly, it was found that the inventive pre-etching composition efficiently can be adjusted to an alkaline pH-value as well as an acidic pH-value. When being adjusted to an alkaline pH-value, a pH-value in the range of pH 8 to 10 is preferred for the inventive pre-etching compositions. Adjustment can be achieved by addition of alkali hydroxides and/or alkaline earth hydroxides, like e.g. NaOH, KOH, Mg(OH)₂, or Ca(OH)₂. When being adjusted to an acidic pH-value, a pH-value in the range of pH 2 to pH 5 is preferred. Adjustment can be achieved by addition of an appropriate acid, like e.g. a mineral acid like HCl, H₃PO₄, or a carboxylic acid like e.g. methane sulfonic acid or the like. The inventive pre-etching composition can also be operated at an almost neutral pH-value, preferably in a range of between pH 5 to pH 8.

In another aspect the invention relates to process for etching a plastic substrate surface prior to a plating process for the deposition of a metal layer on the substrate surface, the process comprising the steps of
a) contacting the substrate surface with an aqueous pre-etching composition according to the invention;
b) contacting the pre-etched surface with an alkaline or acidic etching composition.

Contacting within the meaning of the invention should be understood as dipping the substrate into the pre-etching composition, spray said composition onto said substrate or any other appropriate way to enable the pre-etching composition get in contact with the surface for swelling it.

According to a preferred embodiment of the inventive process, the plastic substrate to be metalized is made from an acrylonitrile butadiene styrene (ABS), a polycarbonate (PC), polyetherimide (PEI), or a blend of an acrylonitrile butadiene styrene (ABS) and a polycarbonate (PC).

In another embodiment of the inventive process, the substrate surface is contacted with the pre-etching composition for a time between 10s to 10 min., preferably 20s to 5 min., most preferred 30s to 3 min. It was found that even at very short contacting time like, e.g. 10s to 1 min. the plastic surface is swelled sufficiently to enhance the subsequent etching step.

According to another embodiment of the invention, the plastic substrate in contacted with the pre-etching composition at a temperature within the range of between 20°C to 100°C, preferably 25°C to 90°C, most preferred between 30°C and 80°C.
The process according to the invention may additionally incorporate a rinse step between the pre-etching step and the etching step to avoid contamination of the etching composition with the pre-etching composition.

The etching composition used in the etching step of the inventive process may be at least one composition of the group consisting of a chromium sulfuric acid etch, a manganese sulfuric acid etch, an acidic manganese etch, and an alkaline manganese etch. Surprisingly, it was found that the pre-etching composition according to the invention can be used in combination with commonly known etchants, also based on acidic solutions as well as alkaline solutions. Therefore, the inventive pre-etching composition can advantageously be integrated in known plastic plating processes without any major amendment of the plating equipment just by adding an additional pre-plating tank. Integration of the inventive pre-etching in known plating processes enhances the productivity of the overall plating process due to a reduced etching time, while at the same time enhancing the adhesion of the metal layer to the substrate surface.

Yet, in another aspect the invention relates to the use of a terpene and/or a phenylpropanoid as a swelling agent in a process of depositing a metal layer on a non-conductive substrate surface. In a preferred embodiment the invention relates to the use of a phenylpropanoid having a structure according to the general formula I 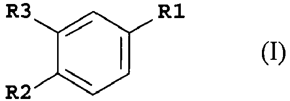 wherein R1 = C₃H₅,C₃H₃O, or C₃H₅O, R2 = H, OCH₃, OH, and R3 = H, OH, OCH₃, COOCH₃, wherein at least R1 differs from R2 or R3, or R2 and R3 as a swelling agent in a process of metal deposition on a plastic substrate surface, like e.g. the surface of substrate made from ABS, PC, PEI, or a blend comprising at least one of the aforementioned plastics.

In another embodiment the invention relates to the use of a compound of the group consisting of anethole, estragole, eugenole, isoeugenole, vanillin, isovanillin, methyl eugenole, cinnamaldehyde, cinnamic acid, coniferyl alcohol, safrole, apiole, dillapiole, citrale, myrcene, geraniol, citronellal, citronellol, 1,8-cineole, carvone, phellandrene, α-pinene, β-pinene, limonene, camphene, 3-carene, terpinolene, bornyl acetate, menthol, menthone, citronellol, nerol, linalool, farnesol, rhodinol, sabinene, borneole, isoborneole, α-terpineol, β-terpineol, γ-terpineol, δ-terpineol, trans-verbenol, cis-verbenol, isovaleric acid, and Gibberellic acid or a mixture of these as a swelling agent in a process of metal deposition on a plastic substrate surface.

In another embodiment the invention relates to the use of a terpene and/or a phenylpropanoid as a swelling agent in a process of depositing a metal layer on a non-conductive substrate surface in combination with a water soluble solvent. Preferably, the solvent is selected from the group consisting of glycols and their derivates, for example dipropylene glycol (DPG), diethylene glycol monobutyl ether (DEG-MBE), diethylene glycol, ethylene glycol, ethylene glycol dimethyl ether, triethylene glycol, diethylene glycol dimethyl ether (diglyme), triethylene glycol dimethyl ether (triglyme), tetraethylene glycol dimethyl ether (tatraglyme), dipropylene glycol dimethyl ether (proglyme), polyethylene glycol dimethyl ether (polyglyme), also several solvents like soluble alcohols, ethers, esters, for example isopentyle diole (IPD), 3-methoxy-3-methylbutan-1-ol (MMB) or its acetate (MMB-Ac), butyro-1.4-lacton, 1.3-dioxacyclopentan, 4-methyl-1.3-dioxacyclopentan or a mixture of these.

The invention is explained in the following in terms of examples.

### Examples of pre-etching compositions

**Table 1**

| Example No. | Solvent | Terpene/phenylpr oanoide/ vanillin | Additive | Acid / Hydroxid |
|---|---|---|---|---|
| 1 | DPG, 400ml/L + DEG-MBE, 30ml/L | Citral, 10ml/L | 2-methylpentanedioic acid dimethyl ester, 20ml/L | |
| 2 | DEG-MBE 300ml/L | Cineol, 10ml/L | 2-methylpentanedioic acid dimethyl ester, 20ml/L | |
| 3 | DPG, 100ml/L | Eugenol, 5ml/L | 2-methylpentanedioic acid dimethyl ester, 20ml/L | |
| 4 | DPG, 250ml/L | Limonen, 20ml/L | | |
| 5 | DEG-MBE 300ml/L | Citronellol, 30ml/L | Ethylacetoacetat, 80ml/L | |
| 6 | DPG, 440ml/L + DEG-MBE, 30ml/L | Carvon, 10ml/L | | |
| 7 | DPG, 430ml/L + DEG-MBE, 30ml/L + MMB-Ac, 5ml/L + IPD, 30ml/L | Citral, 10ml/L | | |
| 8 | DPG, 20ml/L | Isovaleric acid, 10g/L | 2-methylpentanedioic acid dimethyl ester, 20ml/L | |
| 9 | IPD, 400ml/L | Eugenol, 10ml/L | | |
| 10 | DEG-MBE, 250ml/L | Cineol, 10ml/L | | |
| 11 | DPG, 460ml/L | Phellandren, 10ml/L | | |
| 12 | DPG, 250ml/L | Prenol, 10ml/L | | |
| 13 | DEG-MBE, 250ml/L + DPG, 250ml/L | Linalool, 10ml/L | | |
| 14 | DEG-MBE, 250ml/L + DPG, 250ml/L | Gibberellic acid (Gibberellin A3), 10ml/L | | |
| 15 | DPG, 250ml/L | Eugenol, 10ml/L | 6,6-diméthyl bicyclo-(3,1,1)-2-heptene-2-ethanol,20ml/L | Sulfuric acid, 10ml/L |
| 16 | DEG-MBE 300ml/L + IPD, 15ml/L | Estragol, 15ml/L | | Phosphoric acid, 5ml/L |
| 17 | DPG, 100ml/L | Vanillin, 20ml/L | | Potassium hydroxide, 250g/L |
| 18 | DPG, 250ml/L | Limonen, 20ml/L | Ethylacetoacetat, 100ml/L | Methansulfonic acid, 25ml/L |

Exemplarily pre-etching compositions are listed in table 1. The listed ingredients are diluted by addition of deionized water to provide 1000ml of pre-etching composition.

### Examples of pre-etching processes

**Table 2**

| Example No. | pre-etching composition | Substrate | Temp. | Contacting time |
|---|---|---|---|---|
| 20 | see tab. 1 No. 1 | ABS | 60°C | 1 min. |
| 21 | see tab.1 No. 2 | PC-ABS | 60°C | 2 min. |
| 22 | see tab.1 No. 3 | PEI (30% glass fibers) | 35°C | 0.5 min. |

| | | | | |
|---|---|---|---|---|
| Exemplarily pre-etching processes are listed in table 2. | | | | |

### Examples of etching-processes including inventive pre-etching step

**Table 3**

| Example No. | pre-etching | Etching | Temp. | Contacting time |
|---|---|---|---|---|
| 23 | see tab.2 No. 20 | chromic acid / sulfuric acid | 67°C | 10 min. |
| 24 | see tab.2 No. 20 | acidic permanganate | 50°C | 10 min. |
| 25 | see tab.2 No. 20 | alkaline permanganate | 65°C | 10 min. |

The substrates pre-etched according to the processes listed in table 2 were subsequently etched as listed in table 3. The chromic acid / sulfuric acid etchant as used in No. 23 contains 380 g/L chromic acid and 400 g/L of conc. sulfuric acid.

The acidic permanganate etch as used in No. 24 consists of 12.5 g/L manganese, 300 g/L MSA, 780 g/L sulfuric acid, and 73 g/L phosphoric acid.
The alkaline permanganate etch as used in No 25 consists of 15 g/L potassium permanganate and 40 g/L sodium hydroxide.

### Example of overall plating processes

**Table 4**

| | Treatment | | Treatment condition | |
|---|---|---|---|---|
| Substrates: ABS, PC-ABS | Component | Content | Temperature [°C] | Time [min |
| Pre-Etch | Eugenol | 10ml/L | 60 | 0.5 |
| | DPG | 250ml/L | | |
| Rinse | Water | | | |
| Alkaline permanganate etch | Potassium permanganate | 15g/L | 65 | 10 |
| | Sodium hydroxide | 40g/L | | |
| Neutralizer 1 | Oxalic acid | 5g/L | 30 | 4 |
| | Ascorbic acid | 10g/L | | |
| Neutralizer 2 (Conditioner) | Triethanol amine | 10g/L | 35 | 2 |
| Rinse | Water | | | |
| UDIQUE PD plus Activator | UDIQUE DP-310 Stabilizer | 100mL/L | 45 | 4 |
| | UDIQUE DP-320 Activator | 20mL/L | | |
| | Hydrochloric acid | 275mL/L | | |
| Rinse | Water | | | |
| UDIQUE DP plus Conductor | UDIQUE DP-410-A Conductor | 100mL/L | 55 | 4 |
| | UDIQUE DP-420-B Conductor | 200 mL/L | | |
| Rinse | Water | | | |
| Cuprostar 1560 | CuSO₄*H₂O | 215g/L | 25 | 50 |
| | Sulfuric acid | 35mL/L | | |
| | Hydrochloric acid | 0.25mL/L | | |
| | Cuprostar 1560 MAKE UP | 6mL/L | | |
| | Cuprostar 1560 CARRIER | 0.5mL/L | | |
| | Cuprostar 1560 LEVELLER | 0.4mL/L | | |
| | Cuprostar 1560 WETTING AGENT | 0.5mL/L | | |

| | | | | |
|---|---|---|---|---|
| UDIQUE compositions and Cuprostar compositions as mentioned in table 4 are commercially available from Enthone Inc., West Haven, Connecticut, USA. | | | | |

### Results of adherence test

**Table 5**

| Etch | Chromic-sulfuric acid | Acidic Permanganate | Alkaline Permanganate |
|---|---|---|---|
| ABS | 0.59 N/mm | 0.57 N/mm | 0.68 N/mm |
| PC-ABS | 0.70 N/mm | 0.68 N/mm | 0.70 N/mm |

The substrates mentioned in table 5 were treated in accordance with the overall procedure as disclosed in table 4. Adherence tests were performed in accordance with DIN 53494 (1984).

## Claims

1. An aqueous pre-etching composition for the treatment of non-conductive substrates in a plating process for the deposition of a metal layer on a substrate surface, wherein the pre-etching composition contains at least one water soluble solvent, wherein the composition contains at least one compound selected from the group consisting of terpenes, phenylpropanoids, isovanillin and vanillin **characterized in that** the composition additionally contains at least one solvent selected from the group consisting of 2-methylpentanedioic acid dimethyl ester, isopentyl diol, 6,6-dimethyl bicyclo-(3,1,1)-2-heptene-2-ethanol, and ethylacetoacetate.

2. The aqueous pre-etching composition according to claim 1, wherein the solvent is selected from the group consisting of glycols and their derivates, for example dipropylene glycol, diethylene glycol monobutyl ether, diethylene glycol, ethylene glycol, ethylene glycol dimethyl ether, triethylene glycol, diethylene glycol dimethyl ether (diglyme), triethylene glycol dimethyl ether (triglyme), tetraethylene glycol dimethyl ether (tatraglyme), dipropylene glycol dimethyl ether (proglyme), polyethylene glycol dimethyl ether (polyglyme), also several solvents like soluble alcohols, ethers, esters, for example isopentyle diole, 3-methoxy-3-methylbutan-1-ol or its acetate, butyro-1.4-lacton, 1.3-dioxacyclopentan, 4-methyl-1.3-dioxacyclopentan or a mixture of these.

3. The aqueous pre-etching composition according to one of the preceding claims, wherein the terpene is at least one compound selected from the group consisting of acyclic monoterpenes, monocyclic terpenes, bicyclic monoterpenes, sesquiterpenes, diterpenes, and triterpenes.

4. The aqueous composition according to claim 1, wherein the phenylpropanoid is at least one compound selected from the group consisting of anethole, estragole, eugenole, isoeugenole, methyl eugenole, cinnamaldehyde, cinnamic acid, coniferyl alcohol, safrole, apiole, and dillapiole.

5. The aqueous composition according to claim 1, wherein the terpene is at least one compound selected from the group consisting of citrale, myrcene, geraniol, citronellal, citronellol, 1,8-cineole, carvone, phellandrene, α-pinene, β-pinene, limonene, camphene, 3-carene, terpinolene, bornyl acetate, menthol, menthone, citronellol, nerol, linalool, farnesol, rhodinol, sabinene, borneole, isoborneole, α-terpineol, β-terpineol, γ-terpineol, δ-terpineol, trans-verbenol, cis-verbenol, isovaleric acid, and Gibberellic acid.

6. The aqueous composition according to one of the preceding claims, wherein the compound selected from the group consisting of terpenes and phenylpropanoids is comprised in the composition in a concentration of at least 0.005 mol/L, preferably in a concentration within the range between 0.005 mol/L and 1.0 mol/L, more preferred in a concentration within the range between 0.01 mol/L and 0.8 mol/L, even more preferred in a concentration within the range between 0.02 mol/L and 0.5 mol/L, most preferred in a concentration within the range between 0.03 mol/L and 0.3 mol/L.

7. The aqueous composition according to one of the preceding claims, wherein the water soluble solvent is comprised in the composition in a concentration within the range of between 5 Vol.-% and 50 Vol.-%, preferably between 10 Vol.-% and 40 Vol.-%, most preferred between 20 Vol.-% and 40 Vol.-%.

8. The aqueous composition according to one of the preceding claims, wherein the composition contains at least one acid of the group consisting of mineral acid, sulfonic acid, methanesulfonic acid, carboxylic acid, and salts of the aforementioned acids.

9. A process for etching a plastic substrate surface prior to a plating process for the deposition of a metal layer on the substrate surface, the process comprising the steps of
a) contacting the substrate surface with an aqueous pre-etching composition according to one of the claims 1 to 8;
b) contacting the pre-etched surface with an alkaline or acidic etching composition.

10. The process according to claim 9, wherein the plastic substrate is made from an acrylonitrile butadiene styrene (ABS), a polycarbonate (PC), a polyetherimide (PEI), or a blend of an acrylonitrile butadiene styrene (ABS) and a polycarbonate (PC).

11. The process according to one of the claims 9 or 10, wherein the substrate surface is contacted with the pre-etching composition for a time between 10s to 10 min., preferably 20s to 5 min., most preferred 30s to 3 min.

12. The process according to one of the claims 9 to 11, wherein the plastic substrate in contacted with the pre-etching composition at a temperature within the range of between 20°C to 100°C, preferably 25°C to 90°C, most preferred between 30°C and 80°C.

13. The process according to one of the claims 9 to 12, wherein the etching composition is at least one composition of the group consisting of a chromium sulfuric acid etch, a manganese sulfuric acid etch, an acidic manganese etch, and an alkaline manganese etch.

14. The process according to one of the claims 9 to 12, wherein in step b) the pre-etched surface is contacted with an alkaline manganese etching solution containing potassium permanganate in a concentration within the range of between 2 g/L and 150 g/L, preferably between 5 g/L and 100 g/L, most preferred between 7.5 g/L and 80 g/L, said etching solution having a pH value ≥ pH 10, preferably ≥ pH 11, most preferred ≥ pH 12.

## Patentansprüche

1. Wässrige Vorbeizzusammensetzung zum Behandeln nicht leitfähiger Substrate in einem Plattierungsprozess zum Aufbringen einer Metallschicht auf eine Substratoberfläche, wobei die Vorbeizzusammensetzung mindestens ein wasserlösliches Lösungsmittel aufweist, wobei die Zusammensetzung mindestens eine Verbindung enthält, die ausgewählt ist aus der Gruppe bestehend aus Terpenen, Phenylpropanoiden, Isovanillin und Vanillin, **dadurch gekennzeichnet, dass** die Zusammensetzung zusätzlich mindestens ein Lösungsmittel enthält, das ausgewählt ist aus der Gruppe bestehend aus 2-Methylpentandisäuredimethylester, Isopentyldiol, 6,6-Dimethylbicyclo-(3,1,1)-2-hepten-2-ethanol und Ethylacetoacetat.

2. Wässrige Vorbeizzusammensetzung nach Anspruch 1, wobei das Lösungsmittel ausgewählt ist aus der Gruppe bestehend aus Glykolen und ihren Derivaten, wie beispielsweise Dipropylenglykol, Diethylenglykolmonobutylether, Diethylenglykol, Ethylenglykol, Ethylenglykoldimethylether, Triethylenglykolglycol, Diethylenglycoldimethylether (Diglym), Triethylenglykoldimethylether (Triglym), Tetraethylenglykoldimethylether (Tetraglym), Dipropylenglykoldimethylether (Proglym), Polyethylenglykoldimethylether (Polyglym), lösbaren Alkoholen, Ethern, Estern, wie beispielsweise Isopentyldiol, 3-Methoxy-3-methylbutan-1-ol oder dessen Acetat, Butyro-1,4-lacton, 1,3-Dioxacyclopentan, 4-Methyl-1,3-dioxacyclopentan oder einer Mischung davon.

3. Wässrige Vorbeizzusammensetzung nach einem der vorangehenden Ansprüche, wobei das Terpen mindestens eine Verbindung ist, die ausgewählt ist aus der Gruppe bestehend aus azyklischen Monoterpenen, monozyklischen Terpenen, bizyklischen Monoterpenen, Sesquiterpenen, Diterpenen und Triterpenen.

4. Wässrige Zusammensetzung nach Anspruch 1, wobei das Phenylpropanoid mindestens eine Verbindung ist, die ausgewählt ist aus der Gruppe bestehend aus Anethol, Estragol, Eugenol, Isoeugenol, Methyleugenol, Zimtaldehyd, Zimtsäure, Coniferylalkohol, Safrol, Apiol und Dillapiol.

5. Wässrige Zusammensetzung nach Anspruch 1, wobei das Terpen mindestens eine Verbindung ist, die ausgewählt ist aus der Gruppe bestehend aus Citral, Myrcen, Geraniol, Citronellal, Citronellol, 1,8-Cineol, Carvon, Phellandren, α-Pinen, β-Pinen, Limonen, Camphen, 3-Caren, Terpinolen, Bornylacetat, Menthol, Menthon, Citronellol, Nerol, Linalol, Farnesol, Rhodinol, Sabinen, Borneol, Isoborneol, α-Terpineol, β-Terpineol, γ-Terpineol, δ-Terpineol, trans-Verbenol, cis-Verbenol, Isovaleriansäure und Gibberellinsäure.

6. Wässrige Zusammensetzung nach einem der vorhergehenden Ansprüche, wobei die aus der Gruppe bestehend aus Terpenen und Phenylpropanoiden ausgewählte Verbindung in der Zusammensetzung in einer Konzentration von mindestens 0,005 mol/l, vorzugsweise in einer Konzentration im Bereich zwischen 0,005 mol/l und 1,0 Mol/l, bevorzugter in einer Konzentration im Bereich zwischen 0,01 mol/l und 0,8 mol/l, noch bevorzugter in einer Konzentration im Bereich zwischen 0,02 mol/l und 0,5 mol/l, und am bevorzugtesten in einer Konzentration im Bereich zwischen 0,03 mol/l und 0,3 mol/l vorhanden ist.

7. Wässrige Zusammensetzung nach einem der vorhergehenden Ansprüche, wobei das wasserlösliche Lösungsmittel in der Zusammensetzung in einer Konzentration im Bereich zwischen 5 Vol.-% und 50 Vol.-%, vorzugsweise zwischen 10 Vol.-% und 40 Vol .-%, am bevorzugtesten zwischen 20 Vol.-% und 40 Vol.-% enthalten ist.

8. Wässrige Zusammensetzung nach einem der vorhergehenden Ansprüche, wobei die Zusammensetzung mindestens eine Säure enthält, die ausgewählt ist aus der Gruppe bestehend aus Mineralsäure, Sulfonsäure, Methansulfonsäure, Carbonsäure und Salzen der vorstehend erwähnten Säuren.

9. Verfahren zum Beizen einer Kunststoffsubstratoberfläche vor einem Plattierungsprozess zum Aufbringen einer Metallschicht auf der Substratoberfläche, wobei das Verfahren die Schritte aufweist:
a) Inkontaktbringen der Substratoberfläche mit einer wässrigen Vorätzzusammensetzung nach einem der Ansprüche 1 bis 8;
b) Inkontaktbringen der vorgeätzten Oberfläche mit einem alkalischen oder säurehaltigen Beizmittel.

10. Verfahren nach Anspruch 9, wobei das Kunststoffsubstrat aus einem Acrylnitril-Butadien-Styrol (ABS), einem Polycarbonat (PC), einem Polyetherimid (PEI) oder einer Mischung aus einem Acrylnitril-Butadien-Styrol (ABS) und einem Polycarbonat (PC) hergestellt ist.

11. Verfahren nach Anspruch 9 oder 10, wobei die Substratoberfläche für eine Zeitdauer zwischen 10 s und 10 min, vorzugsweise 20 s bis 5 min, am bevorzugtesten 30 s bis 3 min, mit der Vorbeizzusammensetzung in Kontakt gebracht wird.

12. Verfahren nach einem der Ansprüche 9 bis 11, wobei das Kunststoffsubstrat bei einer Temperatur im Bereich zwischen 20°C und 100°C, vorzugsweise 25°C bis 90°C, am bevorzugtesten zwischen 30°C und 80°C, mit der Vorbeizzusammensetzung in Kontakt steht.

13. Verfahren nach einem der Ansprüche 9 bis 12, wobei die Ätzzusammensetzung mindestens eine Zusammensetzung der Gruppe bestehend aus einem Chrom-Schwefelsäure-Beizmittel, einem Mangan-Schwefelsäure-Beizmittel, einem säurehaltigen Manganbeizmittel und einem alkalischen Manganbeizmittel ist.

14. Verfahren nach einem der Ansprüche 9 bis 12, wobei in Schritt b) die vorgeätzte Oberfläche mit einer alkalischen Manganbeizlösung in Kontakt gebracht wird, die Kaliumpermanganat in einer Konzentration im Bereich zwischen 2 g/l und 150 g/l, vorzugsweise zwischen 5 g/l und 100 g/l, am bevorzugtesten zwischen 7,5 g/l und 80 g/l enthält, wobei die Beizlösung einen pH-Wert ≥ pH 10, vorzugsweise ≥ pH 11, am bevorzugtesten ≥ pH 12 hat.

## Revendications

1. Composition de pré-décaper aqueuse pour le traitement de substrats non conducteurs dans un procédé de placage pour le dépôt d'une couche de métal sur la surface d'un substrat, dans laquelle la composition de pré-gravure contient au moins un solvant soluble à l'eau, dans laquelle la composition contient au moins un composé choisi parmi le groupe constitué par les terpènes, les phénylpropanoïdes, l'isovanilline et la vanilline, **caractérisée en ce que** la composition contient à titre complémentaire au moins un solvant choisi dans le groupe constitué par l'ester diméthylique de l'acide 2-méthylpentanedioïque, l'isopentyl diol, le 6,6-diméthyl bicyclo-(3,1,1)-2-heptène-2éthanol, et l'éthylacétoacétate.

2. Composition de pré-décaper aqueuse selon la revendication 1, dans laquelle le solvant est choisi parmi le groupe constitué par les glycols et leurs dérivés, par exemple, le dipropylène glycol, le diéthylène glycol monobutyl éther, le diéthylène glycol, l'éthylène glycol, l'éthylène glycol diméthyl éther, le triéthylène glycol, le diéthylène glycol diméthyl éther (diglyme), le triéthylène glycol diméthyl éther (triglyme), le tétraéthylène glycol diméthyl éther (tétraglyme), le dipropylène glycol diméthyl éther (proglyme), le polyéthylène glycol diméthyl éther (polyglyme), également plusieurs solvants tels que les alcools solubles, les éthers, les esters, par exemple, l'isopentyle diol, le 3-méthoxy-3-méthylbutane-1-ol ou son acétate, la butyro-1,4-lactone, le 1,3-dioxacyclopentane, le 4-méthyl-1,3-dioxacyclopentane ou un mélange de ceux-ci.

3. Composition de pré-décaper aqueuse selon l'une quelconque des revendications précédentes, dans laquelle le terpène est au moins un composé choisi dans le groupe constitué par les monoterpènes acycliques, les terpènes monocycliques, les monoterpènes bicycliques, les sesquiterpènes, les diterpènes, et les triterpènes.

4. Composition aqueuse selon la revendication 1, dans laquelle le phénylpropanoïde est au moins un composé choisi dans le groupe constitué par les anéthols, les estragols, les eugénols, les isoeugénol, méthyl eugénols, l'acide cinnamaldéhyde, cinnamique, l'alcool coniféryl, les safroles, les apiols, et les dillapiols.

5. Composition aqueuse selon la revendication 1, dans laquelle le terpène est au moins un composé choisi dans le groupe constitué par les citrals, le myrcène, le géraniol, le citronellal, le citronellol, le 1,8-cinéol, la carvone, les phéllandrènes, l'α-pinène, le β-pinène, le limonène, le camphène, le 3-carène, le terpinolène, l'acétate de bornyle, le menthol, la menthone, le citronellol, le nérol, le linalol, le farnésol, le rhodinol, le sabinène, les bornéols, l'isobornéol, l'α-terpinéol, le β-terpinéol, le γ-terpinéol, le δ-terpinéol, le trans-verbénol, le cis-verbénol, l'acide isovalérique, et l'acide gibbérellique.

6. Composition aqueuse selon l'une quelconque des revendications précédentes, dans laquelle le composé choisi dans le groupe constitué par les terpènes et les phénylpropanoïdes est présent dans la composition à la concentration d'au 0,005 mol/l, de préférence dans une gamme de concentration entre 0,005 mol/l et 1,0 mol/l, de manière davantage préférée dans une gamme de concentration entre 0,01 mol/l et 0,8 mol/l, de manière encore davantage préférée dans une gamme de concentration entre 0,02 mol/l et 0,5 mol/l, de manière particulièrement préférée dans une gamme de concentration entre 0,03 mol/l et 0,3 mol/l.

7. Composition aqueuse selon l'une quelconque des revendications précédentes, dans laquelle le solvant soluble à l'eau est présent dans la composition dans une gamme de concentration entre 5 % en volume et 50 % en volume, de préférence entre 10 % en volume et 40 % en volume, de manière particulièrement préférée entre 20 % en volume et 40 % en volume.

8. Composition aqueuse selon l'une quelconque des revendications précédentes, dans laquelle la composition contient au moins un acide du groupe constitué par un acide minéral, l'acide sulfonique, l'acide méthanesulfonique, l'acide carboxylique, et les sels des acides mentionnés précédemment.

9. Procédé de décaper de la surface d'un substrat en matière plastique, précédant le procédé de placage par le dépôt d'une couche métallique à la surface du substrat, le procédé comprenant les étapes de
a) mise en contact de la surface du substrat avec la composition aqueuse de pré-décaper selon l'une quelconque des revendications 1 à 8 ;
b) mise en contact de la surface pré-gravée avec une composition de décaper acide ou basique.

10. Procédé selon la revendication 9, dans lequel le substrat en matière plastique est fabriqué à partir d'un acrylonitrile butadiène styrène (ABS), d'un polycarbonate (PC), d'un polyétherimide (PEI), ou d'un mélange d'un acrylonitrile butadiène styrène (ABS) et un polycarbonate (PC).

11. Procédé selon l'une quelconque des revendications 9 ou 10, dans lequel la surface du substrat est mise en contact avec la composition de pré-décaper pendant une durée entre 10s et 10 mn, de préférence entre 20 s et 5 mn, de manière particulièrement préférée entre 30 s et 3 mn.

12. Procédé selon l'une quelconque des revendications 9 à 11, dans lequel le substrat en matière plastique est mis en contact avec la composition de pré-décaper à une température dans un domaine entre 20 °C et 100 °C, de préférence entre 25 °C et 90 °C, de manière particulièrement préférée entre 30 °C et 80 °C.

13. Procédé selon l'une quelconque des revendications 9 à 12, dans lequel la composition de décaper est au moins une composition choisie dans le groupe constitué par la décapant au chrome et à l'acide sulfurique, la décapant au manganèse et à l'acide sulfurique, une décapant au manganèse en milieu acide, et une décapant au manganèse en milieu alcalin.

14. Procédé selon l'une quelconque des revendications 9 à 12, pour lequel dans l'étape b) la surface pré-décaper est mise en contact avec la solution de décaper au manganèse en milieu alcalin contenant du permanganate de potassium dont la concentration se situe dans une gamme entre 2 g/l et 150 g/l, de préférence entre 5 g/l et 100 g/l, de manière particulièrement préférée entre 7,5 g/l et 80 g/l, ladite solution de décaper ayant une valeur de pH ≥ pH 10, de préférence ≥ pH 11, de manière particulièrement préférée ≥ pH 12.
